(19) Europäisches Patentamt

European Patent Office

Office européen des brevets

(11) Publication number: **0 199 122 B1**

## EUROPEAN PATENT SPECIFICATION

(45) Date of publication of patent specification: **13.03.91**

(51) Int. Cl.⁵: **C08J 5/18**, C08J 7/04, C09D 133/00

(21) Application number: **86104017.8**

(22) Date of filing: **24.03.86**

(54) **Polyolefin films of improved impermeability and process for their production.**

(30) Priority: **25.03.85 IT 2005285**

(43) Date of publication of application:
**29.10.86 Bulletin 86/44**

(45) Publication of the grant of the patent:
**13.03.91 Bulletin 91/11**

(84) Designated Contracting States:
**AT BE DE FR GB NL**

(56) References cited:
**EP-A- 0 092 791**
**GB-A- 2 111 428**
**US-A- 3 088 844**
**US-A- 3 427 184**

(73) Proprietor: **Moplefan S.p.A.**
**31, Foro Buonaparte**
**Milan(IT)**

(72) Inventor: **Maugi, Luigi**
**16, P.zza del Mercato Nuovo**
**Terni(IT)**
Inventor: **Cardaio, Rino**
**9/A, Vocabolo Gabelletta**
**Terni(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S. Schu-**
**bert, Dr. P. Barz Siegfriedstrasse 8**
**W-8000 München 40(DE)**

## Description

The present invention relates to polyolefin films having improved impermeability to gases and vapors, and a process for their production. More particularly, the present invention relates to polyolefin films of improved impermeability to gases and vapors that are slippery and free of blocking, and particularly suited for the manufacture of containers, small envelopes, small bags, vessels and other manufactured articles which are primarily intended for use in the packaging industry.

Previous patents and patent applications of applicants disclose films obtained from alpha-olefin polymers of a prevailingly isotactic structure, particularly films obtained from polypropylene consisting essentially of isotactic macromolecules and prepared with stereospecific catalysts.

The mechanical, protective and optical characteristics of such films, in particular of polypropylene films, are such as to make them particularly suited to be used as packaging materials. The impermeability of said films to gases and vapors may not be as high as requried for some applications such as, for example, the packaging of certain food-stuffs which require a particularly high impermeability.

A conventional technique for improving the impermeability of polyolefin films to gases, vapors and flavors is to coat said films with suitable materials.

Generally, the coating is achieved by extrusion of a lacquer onto the base film in the molten state (extrusion coating); by lamination of two films to each other, with or without interposed adhesives; or by spreading the coating material dissolved in a suitable solvent, optionally, together with a primer that will facilitate the adhesion of the coating to the base film. Often, the primer or "anchoring agent" is substituted or is accompanied by a pre-treatment of the base film with chemical agents, with non-perforating electrical discharges, by flame treatment or the like.

As materials suitable for the coating of the polyolefin films there have been described and suggested numerous compounds, prevailingly polymeric compounds, which in general, are applied in the form of solutions in organic solvents. The use of organic solvents, which subsequently are removed from the coated film by evaporation, make it necessary to install apparatuses for the recovery of the solvents, and devices keeping the work places free of vapors. Moreover, it is necessary to use new measures for preventing the pollution of the surrounding atmosphere as well as the pollution of the wash water.

There have been suggested polymeric coating materials that may be applied to the films in the form of aqueous dispersions. The possibility of applying the coating to polyolefin films from aqueous solutions or dispersions allows to attain a substantial saving in production costs, both because no complex and expensive equipment is required for the recovery of the solvents and for the solution of problems connected with the environmental hygiene and pollution, and because it makes the process less complex.

The films coated with the known water-soluble or water-dispersible polymeric materials have, however, little or unsatisfactory impermeability to gases, vapors and flavors, so that they are not suited for the packaging of foodstuffs.

US-A-3,427,184 describes a polyolefin film coated with a vapor-impermeable vinylidene chloride interpolymer. Said film also comprises a primer coat adhered to and superimposed on the polyolefin base film which primer coat may consist of a copolymer of a vinyl ester of an aliphatic saturated monocarboxylic acid having from 1 to 4 carbon atoms and certain unsaturated monocarboxylic acids.

US-A-3,088,844 is directed to a wrapping material having increased stiffness and improved heat sealability and comprising finely divided silica and a polyolefin film which has to satisfy certain requirements and is coated on at least one surface thereof with a coating of a copolymer of vinyl acetate and certain ethylenically unsaturated acids.

GB-A-2,111,428 discloses a packaging material comprising an oriented film of polypropylene coupled with another olefinic polymer film, at least one of the films being coated with a laquer for impermeability to gases and vapours and metallized on the face coupled with the other film. The preferred materials for said laquers are stated to be vinylidene copolymers having a content in vinylidene units greater than 75% by weight.

An object of the present invention is to provide a coating agent for polyolefin films that, besides being suited for application in the form of aqueous solutions or dispersions, will serve as a barrier against gases, vapors and flavors on the coated film.

It has now been found that copolymers containing hydroxyl and carboxyl groups and, optionally, ester groups, which are obtained by partial or complete hydrolysis of a copolymer consisting of an unsaturated ester and of an unsaturated acid or a corresponding anhydride, are useful as coating agents and fulfill the above-mentioned requirements.

Thus, according to the present invention polyolefin films are coated on either one or both surfaces with a copolymer containing hydroxyl and carboxyl groups and, optionally, ester groups, which is obtained by partial or complete hydrolysis of a copolymer consisting of an unsaturated ester and of an unsaturated acid or a corresponding anhydride.

The copolymer consisting of an unsaturated ester and of an unsaturated acid may be chosen from a wide range of products. Specific examples of suitable unsaturated esters are vinyl acetate, vinyl stearate and similar vinyl esters. Specific examples of suitable unsaturated acids are acrylic, methacrylic, maleic, fumaric, crotonic acid and the like, as well as the corresponding anhydrides of said unsaturated acids.

The proportion of the monomers that may be used for producing the copolymer may vary and, in general, is comprised between 95 % and 50 % by weight of a vinyl ester, and correspondingly from 5 % to 50 % by weight of an unsaturated acid.

The hydrolysis of the unsaturated ester/unsaturated acid copolymer is carried out according to known processes, either in water or in organic solvents, operating in the presence of organic or inorganic acids such as, for instance, hydrochloric, sulphuric, benzenesulphonic, toluenesulphonic acids; of ion-exchange resins containing sulphonic or phosphonic groups and the like; of ion-exchange resins containing basic functional groups; or in the presence of organic or inorganic bases such as sodium, potassium, calcium, and ammonium hydroxides; or sodium methylate.

Before applying the coating agent to the film, the surface of said film can be pre-treated in order to ensure a perfect and strong adherence and to avoid peeling phenomena. This pre-treatment may be carried out according to known techniques, e.g. by means of electrical discharges, flame treatment or by chemical oxidation.

The coating agent may be applied to unstretched, mono-axially or biaxially stretched films.

For those applications where a stronger adherence of the coating to the film is desired, i.e., stronger than the adherence obtainable by surface treatment of the film according to one of the above-mentioned methods, there may be used an intermediate layer of a primer.

In this case, the surface of the film is first pre-treated according to one of the above-mentioned methods, the electric discharge treatment being the preferred one, and subsequently a continuous primer coating is applied on the thus treated film surface.

Primers are well known to those skilled in the art and generally consist of an polyalkyleneimine, such as polyethyleneimine. The primer is applied to the base film in the form of a solution by using conventional coating techniques such as, for instance, a spreading machine for thin sheets.

The coating agent is applied in the form of an aqueous solution or dispersion, according to known methods such as, for instance, spreading, immersion (dipping), or spraying. The excess solution or dispersion may be removed by squeezing between rollers or by means of the roto-system or "reverse" system with a dosing bar.

The thickness of the applied coating shall be such as to impart to the coated film the desired properties of impermeability to gases, vapors and flavors as well as the required slipperiness. Total thicknesses of the coatings are preferably comprised between 1 and 20 $\mu$m.

An anti-blocking agent may be added to the copolymer of the coating in order to reduce the tendency of the film to adhere to itself when two or more surfaces of the film itself are kept pressed to each other like, for instance, in the case of film rolls. Suitable anti-blocking agents are waxes or wax-like materials which melt at temperatures higher than the storage temperature and which are not soluble in the coating agent at these temperatures. Specific examples of such anti-blocking agents are natural waxes such as paraffin wax, microcrystalline wax, carnauba wax, Japanese wax and montan wax, and synthetic waxes such as hydrogenated castor oil, chlorinated hydrocarbon waxes and amides 6of long-chain fatty acids.

The films onto which the coatings of the present invention are applied are obtained by extruding olefinic polymers prepared with stereospecific catalysts, in particular polypropylene essentially consisting of isotactic macromolecules, crystalline propylene/ethylene copolymers both of the random as well as block type, polyethylene and mixtures thereof.

Before the film-forming step, suitable additives such as stabilizers, and fillers, may be added to the polymer.

After the extrusion, which is carried out according to the techniques known in the art, the film is optionally heated and oriented by either mono-axial or biaxial stretching and, if appropriate, after having been subjected to surface treatments as described above, is then coated with the coating composition of this invention.

The polyolefin films coated with aqueous dispersions according to this invention possess excellent adhesion, a high impermeability to gases, vapors and flavors, good optical characteristics and a good slipperiness.

The coated films of this invention are useful as components of laminates and composites. They may be further coated with a lacquer or a protective waterproofing layer.

The films may also be coated, before their use in the preparation of laminates and composites with a metallic layer, in particular aluminum, applied by vacuum metallization, which further improves the impermeability of the films to gases, vapors and flavors.

For determining the properties of the coated films according to the present invention, the following methods are employed:

- the adhesion of the coating to the supporting base film is measured by applying a strip of cellulose adhesive tape to the surface of the coated film and then immediately tearing off the adhesive tape from said film surface. Coatings with a good adhesion must remain firmly attached to the base film. Coatings with a poor or bad adhesion are either partially or completely removed from the base film;

- the impermeability to gases, vapors and flavors is determined by measuring the oxygen permeability according to ASTM-E-96.

EXAMPLE 1

Into a 2 l Pyrex glass flask, provided with a stirrer, a thermometer, a reflux-condenser and a loading funnel, there were introduced at room temperature, 125 ml of methanol, 25 g of a vinyl acetate/crotonic acid (90/10 by weight) copolymer and 70 ml of a methanol solution of 24 g sodium methylate.

After 5 minutes, a yellowish mass separates, which consists of the product of the hydrolysis of the copolymer, and which is separated and purified by repeated dissolution in water and precipitation with a 50/50 % by volume ethanol/ethylacetate mixture.

The copolymer, after drying at 50° C under vacuum, shows the following analytical results:

```
hydroxyl groups:          31.7 %

carboxyl groups:           9.3 %

ester groups:             absent

viscosity (in 15%
aqeuous solution):        70 mPas
```

EXAMPLE 2

Operating under the same conditions and with the same quantities as in Example 1, a vinyl acetate/maleic anhydride (50/50 by weight) copolymer was hydrolized.

The hydrolized copolymer, after drying at 50° C under vacuum, showed the following analytical results:

```
hydroxyl groups:          11.7 %

carboxyl groups:          54.1 %

ester groups:             absent

viscosity (in 15%
aqueous solution ):       110 mPas
```

EXAMPLE 3

Operating under the same conditions as in Example 1, a vinyl stearate/acrylic acid (85/15 by weight) copolymer was hydrolized.

The hydrolized copolymer, after drying under vacuum at 50° C, showed the following analytical results:

EP 0 199 122 B1

| | |
|---|---|
| hydroxyl groups: | 17.2 % |
| carboxyl groups: | 34.5 % |
| ester groups: | absent |
| viscosity (in 15% aqueous solution ): | 85 mPas |

EXAMPLE 4

Operating under the same conditions and with the same quantities as in Example 1, a vinyl acetate/crotonic acid (90/10 by weight) copolymer was hydrolized.

The hydrolized copolymer, after drying under vacuum at 50°C, showed the following analytical results:

| | |
|---|---|
| hydroxyl groups: | 17.3 % |
| carboxyl groups: | 5.1 % |
| ester groups: | 22.9 % |
| viscosity (in 15% aqueous solution): | 145 mPas |

EXAMPLES 5 to 8

A polypropylene film obtained by extruding a polypropylene with an intrinsic viscosity of 2.6, a residue of the extraction with heptane of 98.2 %, an ash content of 45 ppm, and having, after stretching, a thickness of 25 $\mu$m, was subjected to an electric discharge treatment with a SCAE type device, and subsequently coated on one of its faces with a 1 % aqueous solution of polyethyleneimine by means of a conventional spreading machine.

The film was then dried in an oven and coated with a second layer consisting of one of the copolymers prepared according to Examples 1-4 and containing both hydroxyl and carboxyl groups.

The copolymer is applied in the form of a 15 % aqueous solution. The coated film was dried at 110°C and showed the properties reported in the following table.

The same film coated on the lacquered side by vacuum metallization with a 0.03 $\mu$m layer of aluminum has an oxygen permeability as recorded in the table.

5

T A B L E

| Copolymer Example No. | Coating Thickness ($\mu$m) | Adhesion | Transparency | Permeability to Oxygen (mL/m$^2$ 24 h 0.1 MPa (atm)) | |
|---|---|---|---|---|---|
| | | | | Before Metallization | After Metallization |
| 1 | 0.6 | Good | Good | 5 | 0.6 |
| 2 | 0.6 | Good | Good | 39 | 5· |
| 3 | 0.6 | Good | Good | 10 | 2 |
| 4 | 0.6 | Good | Good | 12 | 1.6 |
| 1 not hydrolyzed* | 0.6 | Good | Good | 1,500 | 270 |
| 2 not hydrolyzed* | 0.6 | Good | Good | 1,550 | 250 |
| 3 not hydrolyzed* | 0.6 | Good | Good | 1,480 | 230 |

*Comparative examples

**Claims**

1. A polyolefin film having improved impermeability to gases, vapors and flavors, coated on at least one surface with a coating of a copolymer consisting of an unsaturated ester and an unsaturated acid or a corresponding anhydride, characterized in that said copolymer is hydrolyzed and contains hydroxyl, carboxyl and, optionally, ester groups.

2. A polyolefin film according to claim 1, wherein said copolymer contains from 95 to 50% by weight of an unsaturated ester and from 5 to 50 % by weight of an unsaturated acid.

3. A polyolefin film according to any one of claims 1 - 2, wherein said copolymer is selected from copolymers of vinyl acetate and vinyl stearate with an unsaturated acid.

4. A polyolefin film according to claim 3, wherein said unsaturated acid is selected from acrylic acid, methacrylic acid, maleic acid, fumaric acid, crotonic acid and the corresponding anhydrides.

5. A polyolefin film according to any one of claims 1 - 4, which is coated with a metallic layer.

6. A polyolefin film according to claim 5,wherein said metallic layer is aluminum.

7. A polyolefin film according to any one of claims 1 - 6, which is made of polypropylene consisting essentially of isotactic macromolecules, and has been obtained by stereospecific polymerization of propylene.

8. A process for preparing a polyolefin film according to claim 1, which comprises coating at least one surface of a polyolefin film with an aqueous solution or dispersion of the said copolymer containing hydroxyl and carboxyl groups and, optionally, ester groups and drying said coating.

9. The process of claim 8, wherein said polyolefin film is pre-treated with chemical agents, continuous non-perforating electrical discharges or with a flame, and pre-coated with a primer.

10. The process of claim 9, wherein said primer is a polyalkyleneimine.

## Revendications

1. Un feuil ou film de Polyoléfine présentant une imperméabilité améliorée aux gaz, vapeurs, et odeurs, revétu sur au moins une face d'un enduit d'un copolymère constitué d' un ester insaturé et d' un acide insaturé ou anhydride correspondant, caractérisé en ce que ledit copolymère est hydrolysé et contient des groupements hydroxyle, carboxyle et, éventuellement, esters.

2. Un feuil de polyoléfine selon la revendication 1, dans lequel ledit copolymère contient de 95 à 50% en poids d'un ester insaturé et de 5 à 50% en poids d'un acide insaturé.

3. Un feuil de polyoléfine selon l'une quelconque des revendications 1 à 2, dans lequel ledit copolymère est choisi parmi les copolymères d' acétate de vinyle et de stéarate de vinyle avec un acide insaturé.

4. Un feuil de polyoléfine selon la revendication 3, dans lequel ledit acide insaturé est choisi parmi l'acide acrylique, l'acide méthacrylique, l'acide maléique, l'acide fumarique, l'acide crotonique ou les anhydrides correspondants.

5. Un feuil de polyoléfine selon l'une quelconque des revendications 1 à 4, enduit d'une couche métallique.

6. Un feuil de polyoléfine selon la revendication 5, dans lequel ladite couche métallique est de l'aluminium.

7. Un feuil de polyoléfine selon l'une quelconque des revendications 1 à 6, composé de polypropylène constitué principalement de macromolécules isotactiques, obtenu par polymérisation stéréospécifique du propylène.

8. Un procédé de fabrication d'un feuil de polyoléfine selon la revendication 1, comprenant l'enduction d'au moins une face d'un feuil de polyoléfine d'une dispersion ou d'une solution aqueuse dudit copolymère contenant des groupements hydroxyles et carboxyles et éventuellement des groupements esters, et le séchage dudit enduit.

9. Le procédé selon la revendication 8, dans lequel ledit feuil de polyoléfine est pré-traité à l'aide d'agents chimiques, de décharges électriques continues non-perforantes ou à la flamme, et pré-enduit par un primaire.

10. Le procédé selon la revendication 9, dans lequel ledit primaire est une polyalkylèneimine.

## Ansprüche

1. Polyolefin-Film mit verbesserter Undurchlässigkeit gegenüber Gasen, Dämpfen und Aromen, auf wenigstens einer Oberfläche mit einer Beschichtung aus einem aus einem ungesättigten Ester und einer ungesättigten Säure oder einem entsprechenden Anhydrid bestehenden Copolymer überzogen, dadurch gekennzeichnet, daß das Copolymer hydrolysiert ist und Hydroxy-, Carboxylund, gegebenenfalls, Estergruppen enthält.

2. Polyolefin-Film nach Anspruch 1, in welchem das Copolymer 95 bis 50 Gewichtsprozent eines ungesättigten Esters und 5 bis 50 Gewichtsprozent einer ungesättigten Säure enthält.

3. Polyolefin-Film nach irgendeinem der Ansprüche 1 bis 2, in welchem das Copolymer ausgewählt ist aus Copolymeren von vinylacetat und Vinylstearat mit einer ungesättigten Säure.

4. Polyolefin-Film nach Anspruch 3, in welchem die ungesättigte Säure ausgewählt ist aus Acrylsäure, Methacrylsäure, Maleinsäure, Fumarsäure, crotonsäure und den entsprechenden Anhydriden.

5. Polyolefin-Film gemäß irgendeinem der Ansprüche 1 bis 4, welcher mit einer metallischen Schicht überzogen ist.

6. Polyolefin-Film gemäß Anspruch 5, in welchem die metallische Schicht Aluminium ist.

7. Polyolefin-Film gem irgendeine der 5prJche 1 bis 6, welcher hergestellt ist aus Polypropylen, das im wesentlichen aus isotaktischen MakromolekJlen besteht und durch stereospezifische Polrisation von Propylen erhalten worden ist.

8. Verfahren zur Herstellung eines Polyolefin-Films nach spruch 1, welches umfaßt das Heschichten wenigstens einer Oberfläche eines Polyolefin-Piims mit einer wrigen sung oder Dispersion des besagten Copolrneren, das Hydrorvl- und Carboxylgruppen und, gegebenenfalls, Estergruppen enthlt, und die Trocknung dieses rzugs.

9. Verfahren nach spruch 8, in welchem der PolyolefinFilm mit chemischen Mitteln, kontinuierlichen nichtperforierenden elektrischen Entladungen oder mit einer Flamme vorbehandelt und mit einem Primer vorbeschichtet wird.

10. Verfahren nach spruch 9, in welchem der Primer ein Polyalkylenimin ist.